# FASCICULE DE BREVET EUROPEEN

(11) **EP 0 363 260 B1**
(45) Date de publication et mention de la délivrance du brevet: **26.05.1993**
(21) Numéro de dépôt: 89402686.3
(22) Date de dépôt: 29.09.1989
(51) Int. Cl.: B65D 83/06, A01C 7/02, A01C 15/02

(54) **Conditionnement doseur étanche pour horticulture**
Hermetisch verschlossener Dosierbehälter für den Gartenbau
Tight dosing container for horticulture

(30) Priorité: 03.10.1988 FR 8812917; 14.03.1989 FR 8903291
(43) Date de publication de la demande: 11.04.1990
(73) Titulaire: BASF HORTICULTURE ET JARDIN S.A., 92300 Levallois Perret (FR)
(72) Inventeur: Queste, Yves, F-91400 Argenteuil (FR)
(74) Mandataire: Rodhain, Claude

(56) Documents cités:
- DE-A- 1 429 235
- GB-A- 1 365 040
- US-A- 2 906 439
- US-A- 3 515 314

## Description

La présente invention concerne des emballages de produits pour l'horticulture et le jardinage.

Généralement, ces produits sont vendus dans des sachets de papier ou de carton.

Le document US-A-2 906 439 décrit un récipient pour céréal comprenant un corps creux, un verseur et un capot. Le corps creux et le verseur sont liés l'un à l'autre par emboîtement. Le verseur comporte une ouverture qui peut être fermée par le capot.

Le document GB-A-1 365 040 décrit un récipient pour substance granulaire comprenant un corps creux et un capot. Le capot comprend une ouverture qui peut être fermée par un couvercle attaché de manière pivotante au verseur.

Le document DE-A-1 429 235 décrit un emballage poudreur pour substance pulvérulente, granuleuse ou en morceau comprenant un corps creux et un capot liés l'un à l'autre par emboîtement. Le capot présente un évidement et est muni d'une plaque tournante dans laquelle sont pratiquées, dans un secteur de la plaque, des ouvertures permettant le passage de granules d'une certaine dimension. Selon la position dans laquelle se trouve la plaque tournante, celle-ci ouvre ou ferme l'évidement pratiqué dans le capot.

Les sachets en papier ou en carton présentent l'inconvénient d'être sensibles à l'humidité et de ne pas pouvoir être fermés correctement. Il en résulte l'introduction de poussière et une reprise d'humidité. Par ailleurs l'étui se salit rapidement et devient polluant pour les mains.

On connaît également des conditionnements utilisés dans des domaines autres que l'horticulture, mettant en oeuvre des matériaux tels que le verre, le carton, et parfois pour des raisons d'économie des matières plastiques tel que le polyéthylène, réalisé généralement par soufflage. Dans le domaine de l'horticulture, la fragilité des verres les rend mal adaptés au conditionnement des produits.

Les boîtes en carton ne résistent guère à l'humidité et ne sont donc pas plus appropriées. Enfin, les boîtes en matière plastique telles que le polyéthylène se déforment facilement et ne présentent pas une étanchéité suffisante pour la bonne conservation des produits d'horticulture et de jardinage, souvent hydrophile.

De plus, les boîtes fabriquées par soufflage présentent une épaisseur irrégulière, généralement moins importante dans les coins, ce qui provoque très vite une fragilité à ces endroits. De ce fait, les boîtes par soufflage de matière plastique sont souvent percées et perdent leur contenu.

Pour remédier à ces inconvénients, on peut certes augmenter l'épaisseur de matière, mais cela augmente également le poids de l'ensemble de la boîte, et son prix. Par ailleurs, les boîtes connues dans l'état de l'art présentent le désavantage d'être souvent dépareillées et de prendre beaucoup de place pour le rangement.

Les emballages connus dans l'état de l'art présentent encore un autre inconvénient pour leur usage dans le domaine de l'horticulture et du jardinage. Les produits conditionnés nécessitent souvent un dosage, qui se fait selon l'état de la technique à l'aide d'un récipient calibré tel qu'une cuillère, comportant une cavité de volume approprié. Cet ustensile est généralement très vite égaré, et de toutes façons, en raison de son usage répété, pollue le contenu du conditionnement.

La présente invention vise à remédier à ces inconvénients en proposant un conditionnement de produits pour l'horticulture et le jardinage dans un ensemble qui constituer à la fois l'emballage te le verseur doseur. Cet ensemble est construit dans un matériau spécialement adapté et permet un maniement aisé du fait de son encombrement réduit et de son poids relativement plus faible.

La présente invention, est caractérisée par le fait que l'ouverture est située dans une saillie d'une paroi latérale du verseur en retrait par rapport à ladite paroi latérale, qu'une cavité de mesure est prévue dans le capot, et que le capot recouvre entièrement le verseur.

Le corps creux et le verseur sont susceptibles d'être liés l'un à l'autre par emboîtement et permet à l'utilisateur de doser le produit sans avoir à utiliser une cuillère. Outre la suppression des inconvénients précédemment évoqués, ce système de dosage évite à l'utilisateur de plonger la main dans le conditionnement et de venir en contact avec des produits souvent toxiques ou nocifs.

La liaison entre le corps creux et le verseur est étanche à des produits d'une granulométrie supérieure à 5 dixième de millimètre en raison de l'emboîtement partiel des parties du verseur et du corps creux, chacun de ces éléments comportant une partie de surface qui épouse essentiellement la surface de la partie coopérante de l'autre élément lors de l'emboîtement. La partie du verseur peut comporter un chanfrein surmonté d'au moins une saillie elle-même surmontée d'au moins une rainure qui fait tout le tour de la partie inférieure extérieure du verseur. Le corps comprend au moins un jonc sur toute la périphérie de sa partie supérieure intérieure, qui vient s'ajuster dans la rainure du verseur. Le corps creux est muni à sa partie supérieure intérieure, sur toute sa périphérie, d'une rainure. Le verseur est muni à sa partie inférieure extérieure, sur toute sa périphérie, d'un chanfrein surmonté d'un jonc qui vient s'ajuster dans la rainure du corps creux. Le corps creux pourrait aussi comprendre à sa partie supérieure extérieure un chanfrein surmontant un jonc sur toute sa périphérie, alors que le verseur comprendrait à sa partie inférieure intérieure une rainure dans laquelle viendrait s'ajuster ce jonc. Il est également possible que le corps creux comporte à sa partie extérieure supérieure au moins une rainure sur toute sa périphérie, le verseur comprenant à sa partie inférieure intérieure un chanfrein et au moins un jonc qui vient s'ajuster dans la rainure du corps creux.

Pour garantir l'étanchéité de l'ensemble, il est indispensable que le verseur garde sa forme sans se déformer sous l'application des pressions habituellement exercées par l'utilisateur.

Dans ce but, le verseur comprend une partie supérieure ayant une forme en double pente de sorte de l'arête entre les deux pentes forme un raidisseur. On peut du côté du versement, exécuter une pente plus qu'accentuée du côté opposé pour rapprocher l'arête du côté du versement. Additionnellement, on peut aussi prévoir un raidisseur à l'intérieur du verseur.

La réutilisation du capot est assurée par au moins un raidisseur en forme de paroi qui sépare l'intérieur du capot en deux parties de dimensions prévues pour servir de dose du produit contenu dans le corps creux. De plus, l'intérieur du capot est muni d'une graduation sur sa hauteur qui permet de mesurer la quantité de produit qui est mise dans la dose. Les matériaux utilisés sont choisis en fonction du degré de rigidité requis pour les différentes parties de l'invention. Le capot peut se déformer légèrement, mais le corps creux et le verseur doivent conserver rigoureusement leur forme respective. De ce fait, on peut envisager de construire le capot en matériau de type polypropylène injecté, alors que le verseur est de préférence construit en un matériau de type polystyrène demi choc injecté et le creux en un matériau de type polypropylène injecté comportant des homopolymères et des copolymères.

Le verseur comporte une ouverture de dimension variable en fonction de la fluidité du produit contenu dans la boîte et de la dimension de la qualité de mesure. La hauteur de l'ouverture ne dépasse pas trente millimètres et elle est en retrait dans les saillies du verseur.

Lorsque le conditionnement est fermé, c'est-à-dire lorsque le capot, le verseur et le corps creux sont assemblés, il présente une forme extérieure parallélépipédique. Les conditionnement selon la présente invention peuvent être fabriqués en plusieurs dimensions. Selon un aspect particulier de la présente invention, la hauteur d'un conditionnement d'une certaine dimension est égal à la somme de la hauteur et de la largeur d'un conditionnement de dimension immédiatement inférieur. On facilite ainsi le rangement des boîtes de différentes tailles, étant donné que la hauteur totale d'un empilement de deux conditionnements plus petits, l'un orienté horizontalement, l'autre orienté verticalement, atteint la même hauteur qu'un conditionnement d'une taille supérieure. Cette caractéristique de forme et de dimension permet de ranger les conditionnements dans un volume réduit et de ne pas perdre de place. Le corps creux présente une collerette pour maintenir des sachets, et/ou son ouverture à la partie supérieure et fermée par un opercule qui peut être cassé avec le doigt. Cet opercule est avantageusement en matière polystyrène.

Selon une variante, le verseur est collé au moins partiellement sur le corps creux. De préférence, la colle employée est une colle de type "HOT MELT" terme usuellement employé par l'homme du métier pour désigner des colles à chaud, et en particulier des colles de type "HOT MELT" conservant une caractère poisseux persistant.

L'emploi d'une telle colle va certes à l'encontre des préjugés de l'homme du métier. En effet, il est bien connu dans l'état de l'art que l'assemblage solide de deux composants se fait avec des colles dont le caractère poisseux disparait le plus rapidement possible. Dans le cas présent toutefois, la persistance du caractère poisseux permet de réaliser un joint entre le verseur et le corps creux, joint ne se dégradant pas lors des déformations du corps du conditionnement. En particulier, lorsque l'utilisateur exerce une pression sur deux faces opposées du conditionnement, il se produit une déformation par flambage des parois du corps creux entraînant des contraintes au niveau du collage entre le verseur et le corps creux. L'emploi d'une colle à caractère poisseux faible ou nul entraînerait une rupture du collage et donc une perte de l'étanchéité. Par contre, la persistance du caractère poisseux permet d'absorber ces contraintes.

De préférence, le verseur est prolongé par une jupe s'emboîtant dans le corps creux. Cette jupe offre ainsi une surface de collage suffisante pour assurer une bonne liaison.

Avantageusement, la jupe comporte sur deux faces opposées au moins des stries longitudinales de faible relief susceptibles de coopérer avec des stries complémentaires prévues sur les surfaces intérieures du corps creux. Ces stries assurent un accrochage du verseur dans le corps creux complétant la liaison par collage. L'emploi du terme "faible relief" ne constitue pas une imprécision mais doit être interprétée en fonction des dimensions du conditionnement. On entend par "faible relief" des stries et protubérances susceptibles d'être réalisées par moulage d'une matière plastique, et autorisant un retrait du moule lorsque la pièce est encore chaude, par simple déformation élastique de la pièce moulée. A titre d'exemple, on peut qualifier de faible relief des stries d'une profondeur inférieure de deux dixième de millimètres, dans le cas de pièces dont la plus grande dimension n'excède pas 20 cm. Mais il est bien entendu que pour des emballages de plus grande dimension, le relief peut être légèrement supérieur et pour des conditionnement de plus petites dimensions, la profondeur maximale des stries devra être inférieure.

Selon une variante préférée, la jupe comporte le long de son bord supérieur un jonc d'une faible épaisseur. Le terme de "faible épaisseur" a la même signification que le terme de faible relief précédemment employé.

Ce jonc pénètre en force dans la partie supérieure du corps creux lorsque l'on emboîte le verseur. Ce jonc a pour objet de réaliser un barrage à la pellicule de colle qui pourrait sans cela baver au niveau de la jonction du verseur et du corps creux.

De préférence, le corps présente au moins un bourrelet transversal de faible épaisseur. la distance entre ce bourrelet et le bord supérieur est inférieure à la hauteur de la jupe du corps creux. Ce bourelet a pour effet de répartir la pellicule de colle sur toute la hauteur de la jupe.

De préférence, le corps creux comporte deux bourrelets transversaux parallèles. Le bourrelet transversal inférieur renforce l'étanchéité du conditionnement ainsi réalisé pour créer un deuxième barrage à l'introduction d'humidité ou la sortie des matières pulvérulentes conditionnées.

Selon une variante particulière, la jupe comporte sur deux faces latérales opposées au moins un bourrelet axial de faible épaisseur. Ce bourrelet axial a pour effet de maintenir les parois du corps creux écartées des jupes encollées afin d'éviter que les bords supérieurs du corps creux ne raclent la colle, ce qui aurait pour effet une mauvaise répartition.

Selon un mode de réalisation particulier, le jonc comporte, au niveau de chaque coin, une prolongation axiale chanfreinée. Cette prolongation axiale a pour effet de faciliter le positionnement axial du verseur dans le corps creux lors de l'emboîtage. Par ailleurs, ces prolongements chanfreinés créent une tension sur les faces latérales du corps creux lors de l'emboîtement, tension qui participe au maintien d'un faible espace entre la jupe et les surfaces du corps creux. Ce faible espace est nécessaire pour éviter un laminage de la colle.

Selon un mode de réalisation particulier, le verseur comporte des pattes inférieures axiales s'étendant au-delà de la bordure inférieure de la jupe par une partie convexe. Ces pattes facilitent la mise en place du verseur sur le corps creux.

D'autres caractéristiques et avantages ressortiront de la description suivante en référence aux dessins annexés représentant dans un mode de réalisation des exemples de construction du conditionnement selon l'invention.
La figure 1 est une vue éclatée du conditionnement;
Les figures 2, 3 et 4 représentent dans des vues en coupe la liaison et l'ajustement entre le corps creux, le verseur et le capot dans un mode de construction;
La figure 5 représente dans une mode de réalisation, le capot suivant une coupe longitudinale;
La figure 6 représente selon un mode de construction le verseur;
La figure 7 représente en vue de face l'empilement des conditionnements;
La figure 8 représente l'écoulement d'un produit d'horticulture du verseur dans une cavité doseuse du capot;

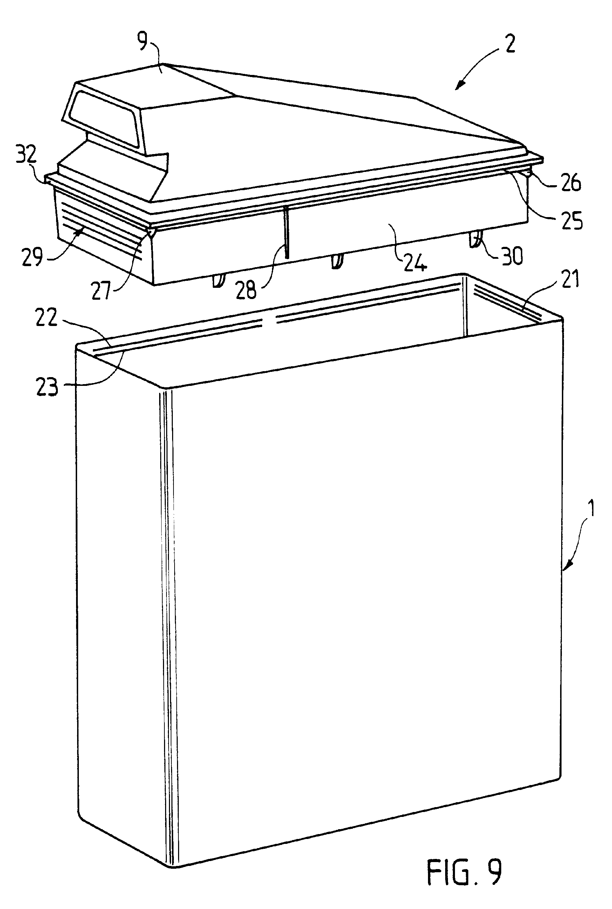

La figure 9 représente une vue éclatée dans une variante du conditionnement; et
La figure 10 représente une vue en coupe de la liaison entre le corps creux et le verseur.

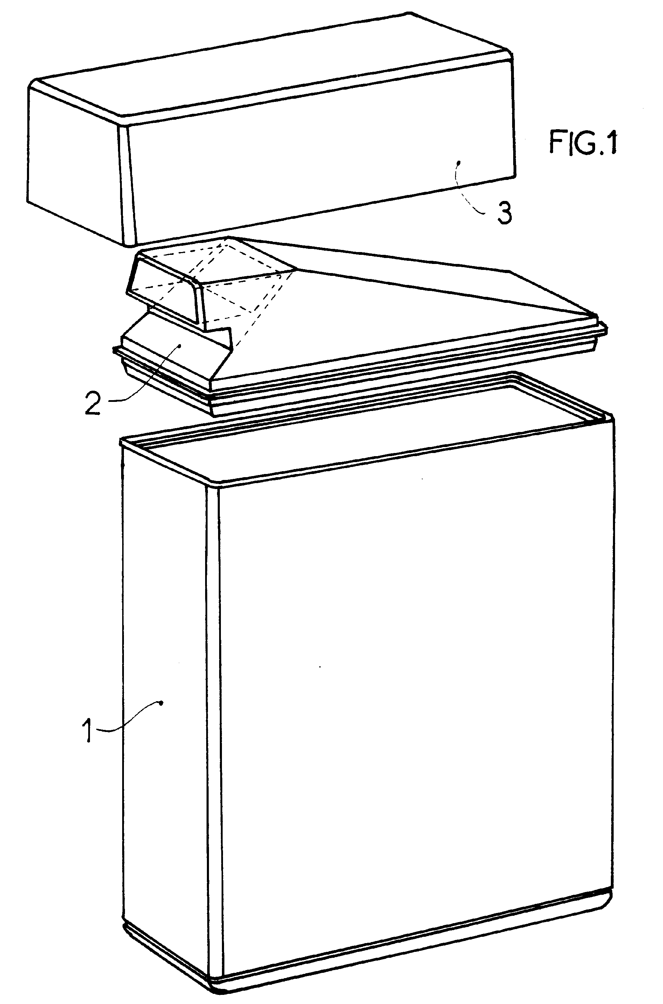

Sur la figure 1, on peut constater que le conditionnement est constitué essentiellement par trois pièces, le corps creux (1), le verseur (2) et le capot (3). On peut voir que le verseur (2) se lie au corps creux (1) par un système de liaison : jonc-rainure qui fait tout le tour de l'ouverture aussi bien du corps creux (1) que du verseur (2), le verseur assure également la liaison avec le capot (3) qui vient se placer sur le verseur.

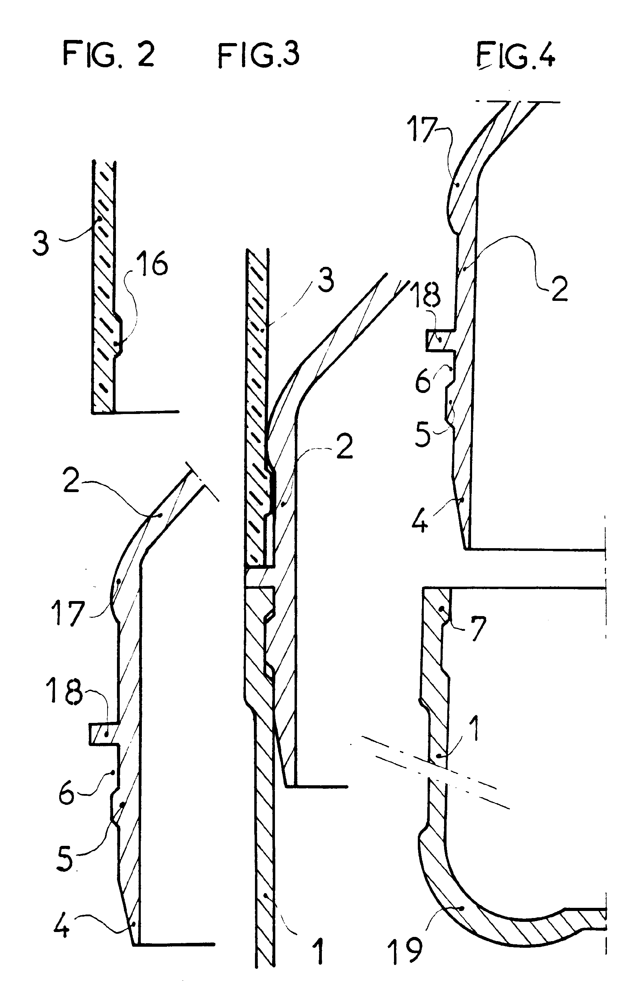

La figure 2 permet de voir, dans une vue en coupe, la liaison du capot (3) qui présente une excroissance (16) qui permet au capot (3) de s'encliqueter sur le verseur (2) quand l'excroissance (16) du capot descend plus bas que l'excroissance (17) du verseur, cette dernière bloque le capot (3) de manière à ce qu'il reste solidaire du verseur, la figure 2 représente également en coupe la configuration géométrique de la partie inférieure du verseur (2) qui permet d'assurer une liaison étanche avec le corps creux. Les deux pièces représentées sur la figure 2 ne sont pas assemblées.

Les hachures du capot (3) indiquent qu'il est construit dans un matériau plastique quelconque.

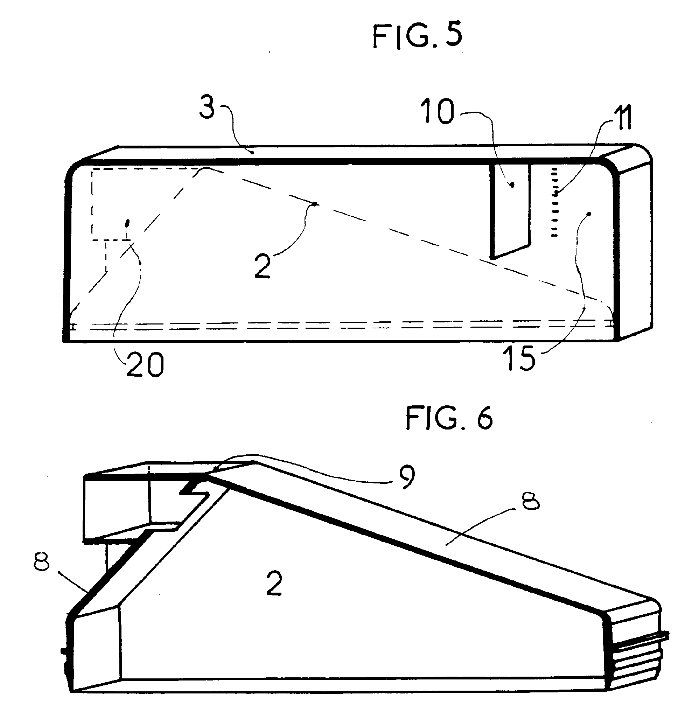

La figure 3 représente en coupe la liaison entre le capot (3), le verseur (2), le corps creux (1) ces trois pièces étant assemblées, on peut appeler cette position "position fermée ou rangée". Cette figure représente la façon dont la géométrie de liaison entre les trois pièces mentionnées ci-dessus s'agence pour obtenir une liaison étanche, on peut constater que le verseur (2) présente une saillie (18), le capot (3) vient en butée sur le haut de cette saillie (18) et le corps creux vient en butée sur le bas de cette saillie (18), cette saillie dans les meilleures réalisations dépasse de manière à s'ajuster au niveau de la paroi extérieure du capot (3) et du haut de la paroi extérieure du corps creux (1). Les détails géométriques de formes assurant la liaison entre le corps creux (1) et le verseur (2) sont représentés en position ouverte à la figure 4.

La figure 4 représente en coupe, en position séparée ou ouverte, les détails de forme assurant la liaison étanche entre le verseur (2) et le capot (3). Cette figure représente un chanfrein (4) à la partie inférieure du verseur (2), au-dessus du chanfrein (4) une excroissance (5) qui forme une rainure (6) avec la butée (18). Le verseur (2) vient s'encastrer dans le corps creux (1) . Cette figure représente le jonc (7) du corps creux (1) qui s'encastre dans la rainure (6), elle représente également la courbure (19) d'épaisseur renforcée qui fait la longueur de l'angle inférieur du corps creux.

La figure 5 représente une vue du capot (3) coupé longitudinalement. Elle montre un raidisseur (10) formant cloison de façon à constituer des cavités (20) et (15) servant au dosage des produits, l'échelle graduée (11) permettant d'affiner ce dosage. On a indiqué dans cette figure, en ligne pointillée, la manière dont se loge le verseur (2).

La figure 6 représente en coupe longitudinale un verseur (2). La pente (8) est plus accentuée du côté du bec verseur de façon à former une arête (9) au sommet du verseur (2), ce qui lui donne cette forme assymétrique représentée à la figure 6.

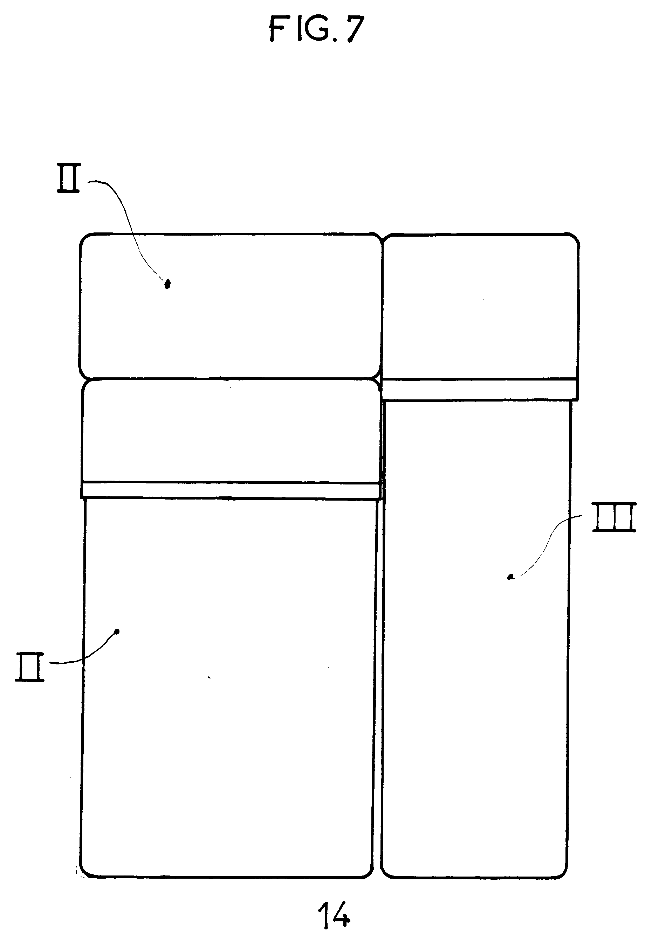

La figure 7 représente un empilement (14) vu de face de conditionnement de deux dimensions, un modèle plus grand III et plusieurs conditionnements d'un modèle plus petit II. On constate que la superposition des modèles II dont l'un est horizontal et au moins deux sont verticaux arrive à la hauteur du conditionnement III de manière à ne pas laisser d'espace vide entre des conditionnements même de tailles différentes.

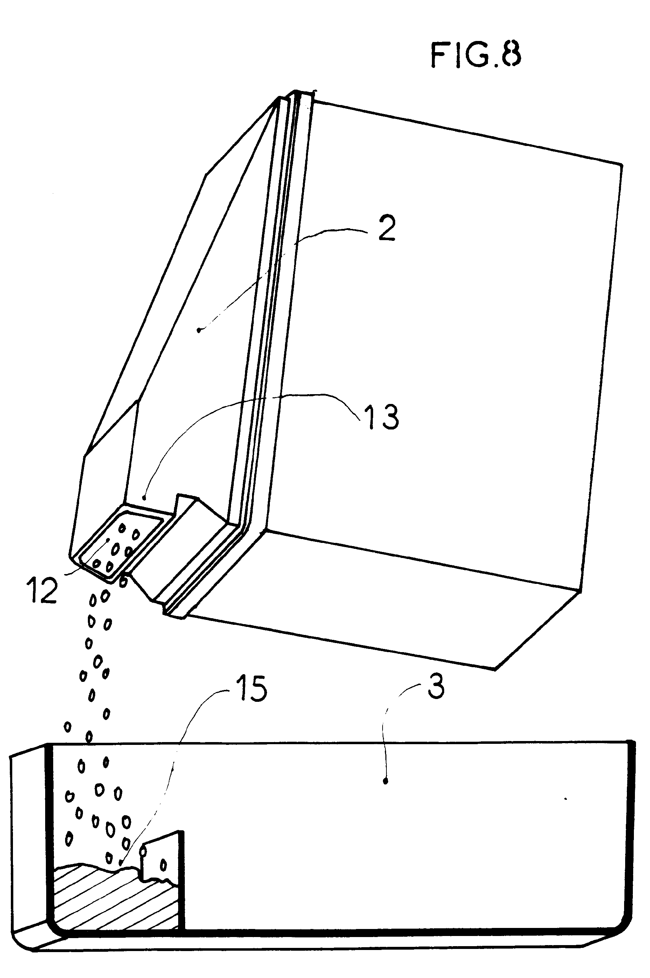

La figure 8 représente le versement d'un produit du verseur (2) dans le capot (3), elle montre l'ouverture (12) protégée par des saillies (13) du verseur (2), et le produit qui sort de cette ouverture pour tomber dans la cavité (15) du capot. La figure 8 représente le verseur (2) maintenu au-dessus du capot (3), mais on constate que l'on pourrait descendre le verseur (2) de manière à ce que les saillies (13) de l'ouverture (12) pénètrent légèrement dans le capot (3), les saillies servant de guide au produit. Le corps creux est construit en un matériau polypropylène injecté contenant de l'homopolymère et du copolymère mélangés pour augmenter la rigidité et résister au froid.

La description n'a présenté qu'un nombre réduit de possibilités de réalisation de l'invention et il existe un grand nombre de variantes de constructions qui reste dans le domaine de la présente invention.

Le conditionnement tel que représenté en figure (9) est constitué par un corps creux (1) et un verseur (2). Il comprend en outre un capot non représenté ici. Le corps creux (1) est constitué par une boîte sensiblement parallélépipédique ouverte à sa face supérieure. Il comporte à son extrémité supérieure des stries transversales (21) dont le relief n'excède pas deux dixième de millimètres. Par ailleurs, les deux faces larges comportent une série de bourrelets (22, 23) interrompus en leur milieu. L'épaisseur de ces bourrelets est également de l'ordre de deux dixième de millimètres.

Le verseur (2) comporte une jupe (24) susceptible de s'emboîter dans l'extrémité supérieure du corps creux (1). Cette jupe (24) comporte le long de son bord supérieur un jonc (25) d'une épaisseur d'environ deux dixième de millimètres. Ce jonc présente une section sensiblement rectangulaire à l'exception des coins (26, 27) qui sont chanfreinés. Les deux grandes surfaces de la jupe (24) comportent en outre un bourrelet (28) d'une épaisseur d'environ deux dixième de millimètres. Ce bourrelet viendra glisser dans la coupure des bourrelets (22, 23) du corps creux.

Les deux petites faces de la jupe (24) présentent des stries (29) susceptibles de coopérer avec les stries (21) prévues sur l'extrémité supérieure du corps creux (1).

Le verseur (2) comporte en outre des pattes (30) dont l'extrémité inférieure est convexe. Ces pattes (30) facilitent la mise en place du verseur (2) sur le corps creux (1).

L'assemblage du corps creux (1) et du verseur (2) s'effectue comme suit :

Le corps creux (1) et le verseur (2) sont fabriqués par moulage d'une matière plastique selon des procédés connus.

Les deux éléments sont ensuite transportés par une chaîne d'assemblage en vue du remplissage du corps creux d'une matière pulvérulente et de l'encollage de la jupe avec une bande de colle du type "HOLT MELT". Le verseur est ensuite saisi de façon manuelle ou automatique et est mis en place sur le corps creux. L'assemblage est facilité par la présence d'une patte (30) à extrémités convexes.

En exerçant une pression axiale sur le verseur, on provoque l'emboîtage dudit verseur et du corps creux.

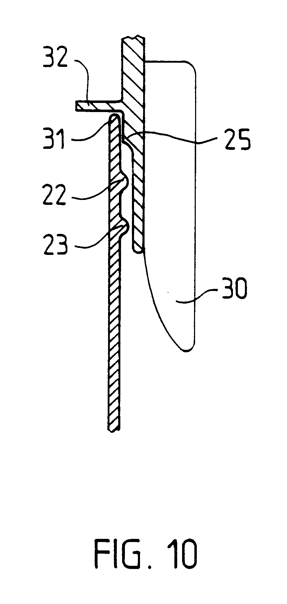

La figure 10 représente une vue en détail de l'assemblage entre le corps creux (1) et le verseur (2). Lors de l'emboîttage, le bourrelet axial (28) empêche le contact direct entre la jupe (24) et les surfaces intérieures du corps creux (1) en préservant un espace intercalaire de l'ordre de deux dixièmes de millimètres. Lorsque la jupe (24) vient en contact avec le bourrelet supérieur (22). Ce dernier étale uniformément la pellicule de colle "HOT MELT" sur les surfaces latérales de la jupe (24) lorsque l'on poursuit l'engagement de la jupe (24). Lorsque l'on poursuit l'engagement du verseur (2) dans le corps creux (1), le jonc (25) vient au niveau de l'extrémité supérieure (31) des parois du corps creux (1) et empêche tout débordement de colle.

Le verseur est enfoncé jusqu'à ce que la bordure (32) du verseur vienne s'appuyer sur le bord supérieur du corps creux (1).

## Revendications

1. Conditionnement doseur étanche pour l'horticulture ou jardinage comprenant un corps creux (1), un verseur (2) et un capot (3), le corps creux et le verseur étant capables d'être liés l'un à l'autre par emboîtement en produisant une fermeture étanche aux produits, le verseur (2) comportant une ouverture (12), caractérisé en ce que l'ouverture (12) est située dans une saillie (13) d'une paroi latérale du verseur (2) en retrait par rapport à ladite paroi latérale, qu'une cavité de mesure (15,20) est prévue dans le capot, et que le capot recouvre entièrement le verseur.

2. Conditionnement doseur étanche selon la revendication 1, caractérisé en ce que le corps creux (1) est muni à sa partie supérieure intérieure sur toute sa périphérie d'une rainure; et que le verseur (2) est muni à sa partie inférieure extérieure sur toute sa périphérie d'un chanfrein surmonté d'un jonc qui vient s'ajuster dans la rainure du corps creux (1).

3. Conditionnement doseur étanche selon les revendications 1 ou 2, caractérisé en ce que le corps creux (1) comprend à sa partie extérieure supérieure un chanfrein surmontant un jonc sur toute sa périphérie; le verseur (2) comprend à sa partie inférieure intérieure une rainure dans laquelle vient s'ajuster le jonc.

4. Conditionnement doseur étanche selon l'une quelconque des revendications précédentes, caractérisé en ce que le corps creux (1) comporte à sa partie extérieure supérieure au moins une rainure sur toute sa périphérie; le verseur (2) comprend à sa partie inférieure intérieure sur toute sa périphérie un chanfrein et au moins un jonc qui vient s'ajuster dans la rainure du corps creux (1)

5. Conditionnement doseur étanche selon l'une quelconque des revendications précédentes, caractérisé en ce que le verseur (2) comprend au moins un raidisseur et/ou qu'il comporte une partie supérieure à deux pentes, la pente (8) d'une ouverture (12) étant plus accentuée que la pente opposée (8) afin de produire une arête supérieure (9) entre le 1/4 ou le 1/3 de sa longueur située du côté de l'ouverture.

6. Conditionnement doseur étanche selon l'une quelconque des revendications précédentes, caractérisé en ce que le capot (3) comprend au moins un raidisseur (10) conforme de parois qui sépare l'intérieur du capot (3) aux différentes parties (15, 20) de dimension prévue pour servir de cavité doseuse du produit contenu dans le corps creux (1) et il comprend une graduation (11) sur sa hauteur.

7. Conditionnement doseur étanche selon l'une quelconque des revendications précédentes, caractérisé en ce que le capot (3) est constitué de matériau polypropylène injecté.

8. Conditionnement doseur étanche selon l'une quelconque des revendications 1 à 6, caractérisé en ce que le verseur (2) est constitué en matériau polystyrène demi-choc injecté.

9. Conditionnement doseur étanche selon l'une quelconque des revendications précédentes, caractérisé en ce que le verseur comporte une ouverture (12) de dimension variable en fonction de la fluidité du produit contenu dans la boîte et de la dimension de la cavité de mesure (15, 20), la hauteur de l'ouverture ne dépasse pas les 30 millimètres.

10. Conditionnement doseur étanche selon l'une quelconque des revendications précédentes, caractérisé en ce que le corps creux (1) est fabriqué en polypropylène injecté comportant de l'homopolymère et du copolymère.

11. Conditionnement doseur étanche selon l'une quelconque des revendications précédentes, caractérisé en ce qu'il présente une collerette pour maintenir des sachets, et/ou son ouverture à la partie supérieure est fermée par un opercule qui peut être cassé avec le doigt.

12. Conditionnement doseur étanche selon la revendication 11, caractérisé en ce que l'opercule est en matériau polystyrène.

13. Conditionnement doseur étanche selon l'une quelconque des revendications précédentes, caractérisé en ce que chaque conditionnement (II, III) comporte une forme parallélépipédique, l'ensemble de conditionnement comportant des conditionnements de tailles discrètement distinctes, la hauteur d'un conditionnement d'une dimension supérieure équivalant à la somme entre la hauteur et la largeur d'un conditionnement d'une taille immédiatement inférieure par rapport à ladite taille supérieure.

14. Conditionnement doseur étanche selon la revendication 1, comprenant au moins un corps creux (1), un verseur (2) et un capot (3), le corps creux (1) et le verseur (2) étant susceptible d'être liés l'un à l'autre par emboîtement en produisant une fermeture étanche au produit d'une granulométrie supérieure à 5 dixièmes de millimètres, caractérisé en ce que le verseur (2) est collé au moins partiellement sur le corps creux (1).

15. Conditionnement doseur étanche selon la revendication 14, caractérisé en ce que le verseur est collé sur le corps creux par une colle du type "HOT MELT" à caractère poisseux persistant.

16. Conditionnement doseur étanche selon la revendication 1, caractérisé en ce que le verseur est prolongé par une jupe (24) s'emboîtant dans ledit corps creux (1).

17. Conditionnement doseur étanche selon la revendication 16, caractérisé en ce que la jupe (24) comporte sur au moins deux faces opposées des stries (29) longitudinales de faible relief susceptibles de coopérer avec des stries (21) complémentaires prévues sur les surfaces intérieures du corps creux (2).

18. Conditionnement doseur étanche selon la revendication 16 ou 17, caractérisé en ce que la jupe (24) comporte le long de son bord supérieur un jonc (25) d'une faible épaisseur.

19. Conditionnement doseur étanche selon la revendication 1, caractérisé en ce que le corps creux comporte sur au moins deux faces opposées un bourrelet (22) de faible épaisseur, disposé à une distance du bord supérieur inférieur à la hauteur de la jupe (24) du corps creux (2).

20. Conditionnement doseur étanche selon la revendication 1, caractérisé en ce que ledit corps creux (1) comporte en outre un deuxième bourrelet (23) longitudinal disposé parallèlement audit premier bourrelet (22).

21. Conditionnement doseur étanche selon la revendication 16, caractérisé en ce que la jupe (24) comporte sur au moins deux faces latérales un bourrelet axial (28) de faible épaisseur.

22. Conditionnement doseur étanche selon la revendication 18, caractérisé en ce que le jonc (25) comporte au niveau de chaque coin (26, 27) une prolongation axiale chanfreinée.

23. Conditionnement doseur étanche selon la revendication 1, caractérisé en ce que le verseur (2) comporte des pattes intérieures axiales (30) s'étendant au-delà de la bordure inférieure de la jupe (24) par une partie convexe.

## Patentansprüche

1. Hermetisch verschlossener Dosierbehälter für den Gartenbau oder die Gärtnerei bestehend aus einem Hohlkörper (1), einem Ausgießer (2) und einer Abdeckhaube (3), wobei der Hohlkörper und der Ausgießer durch Aufstecken unter Bildung eines gegenüber dem Behälterinhalt dichten Verschlusses miteinander verbunden werden können und wobei der Ausgießer (2) eine Öffnung (12) aufweist, dadurch gekennzeichnet, daß die Öffnung (12) in einem Vorsprung einer Seitenwand des Ausgießers (2) vertieft gegenüber dieser Seitenwand angeordnet ist, daß in der Abdeckhaube ein Meßraum (15, 20) vorgesehen ist und daß die Abdeckhaube den gesamten Ausgießer abdeckt.

2. Hermetisch verschlossener Dosierbehälter nach Anspruch 1, dadurch gekennzeichnet, daß der Hohlkörper (1) auf der Innenseite seines Oberteils über seinen gesamten Umfang eine Auskehlung aufweist und daß der Ausgießer (2) auf der Außenseite seines Unterteils über seinen gesamten Umfang eine Abfasung mit darüber angeordnetem Sprengring aufweist, der in die Auskehlung des Hohlkörpers (1) eingepaßt wird.

3. Hermetisch verschlossener Dosierbehälter nach Anspruch 1 oder 2, dadurch gekennzeichnet, daß der Hohlkörper (1) auf der Innenseite seines Oberteils eine Abfasung mit einem Sprengring über seinen gesamten Umfang aufweist und daß der Ausgießer auf der Innenseite seines Unterteils eine Auskehlung aufweist, in die der Sprengring eingepaßt wird.

4. Hermetisch verschlossener Dosierbehälter nach einem der vorangehenden Ansprüche, dadurch gekennzeichnet, daß der Hohlkörper (1) auf der Außenseite seines Oberteils mindestens eine Auskehlung über seinen gesamten Umfang aufweist und daß der Ausgießer (2) auf der Innenseite seines Unterteils über seinen gesamten Umfang eine Abfasung und minde-Hohlkörpers (1) eingepaßt wird.

5. Hermetisch verschlossener Dosierbehälter nach einem der vorangehenden Ansprüche, dadurch gekennzeichnet, daß der Ausgießer (2) mindestens eine Aussteifung aufweist und/oder daß er ein Oberteil mit zwei Schrägen umfaßt, wobei die Schräge (8) einer Öffnung stärker ausgeprägt ist als die gegenüberliegende Schräge (8), so daß eine obere Kante (9) zwischen 1/4 oder 1/3 seiner Länge auf der Seite der Öffnung gebildet wird.

6. Hermetisch verschlossener Dosierbehälter nach einem der vorangehenden Ansprüche, dadurch gekennzeichnet, daß die Abdeckhaube (3) mindestens eine wandförmige Aussteifung (10) aufweist, welche das Innere der Abdeckhaube (3) in die verschiedenen Teilbereichen (15, 20) mit vorgegebener Größe als Dosierraum für den Inhalt des Hohlraums (1) abtrennt, und daß er eine Teilung (11) über seine Höhe umfaßt.

7. Hermetisch verschlossener Dosierbehälter nach einem der vorangehenden Ansprüche, dadurch gekennzeichnet, daß die Abdeckhaube (3) aus Spritzpolypropylen ausgeführt ist.

8. Hermetisch verschlossener Dosierbehälter nach einem der vorangehenden Ansprüche, dadurch gekennzeichnet, daß der Ausgießer (2) aus mittelschlagfestem Spritzpolystyrol ausgeführt ist.

9. Hermetisch verschlossener Dosierbehälter nach einem der vorangehenden Ansprüche, dadurch gekennzeichnet, daß der Ausgießer eine Öffnung (12) aufweist, deren Größe in Abhängigkeit von der Fließfähigkeit des Behälterinhalts und von der Größe des Meßraums (15, 20) veränderlich ist, wobei die Höhe der Öffnung 30 Millimeter nicht überschreitet.

10. Hermetisch verschlossener Dosierbehälter nach einem der vorangehenden Ansprüche, dadurch gekennzeichnet, daß der Hohlraum (1) aus Spritzpolypropylen mit Homopolymerisat und Copolymer hergestellt wird.

11. Hermetisch verschlossener Dosierbehälter nach einem der vorangehenden Ansprüche, dadurch gekennzeichnet, daß er einen Bund für das Halten von Beuteln aufweist und/oder daß seine Öffnung im Oberteil durch einen Deckel verschlossen ist, der mit dem Finger eingedrückt werden kann.

12. Hermetisch verschlossener Dosierbehälter nach Anspruch 11, dadurch gekennzeichnet, daß der Deckel aus Polystyrol ausgeführt ist.

13. Hermetisch verschlossener Dosierbehälter nach einem der vorangehenden Ansprüche, dadurch gekennzeichnet, daß jeder Teilbehälter (II, III) eine Parallelepipedform aufweist, wobei der Gesamtbehälter Teilbehälter mit abgestuft unterschiedlicher Größe umfaßt, so daß die Höhe des jeweils größeren Teilbehälters gleich der Summe aus der Höhe und der Breite des nächst kleineren Teilbehälters ist.

14. Hermetisch verschlossener Dosierbehälter nach Anspruch 1, bestehend aus mindestens einem Hohlkörper (1), einem Ausgießer (2) und einer Abdeckhaube (3), wobei der Hohlkörper (1) und der Ausgießer (2) durch Aufstecken unter Bildung eines gegenüber dem Behälterinhalt mit einer Korngröße über 5 Zehntel Millimeter dichten Verschlusses miteinander verbunden werden können, dadurch gekennzeichnet, daß der Ausgießer (2) zumindest teilweise am Hohlkörper (1) verklebt ist.

15. Hermetisch verschlossener Dosierbehälter nach Anspruch 14, dadurch gekennzeichnet, daß der Ausgießer anhand eines Klebers vom Typ "HOT MELT" mit Dauerklebrigkeit am Hohlkörper verklebt ist.

16. Hermetisch verschlossener Dosierbehälter nach Anspruch 1, dadurch gekennzeichnet, daß der Ausgießer in eine Schürze (24) übergeht, die am Hohlkörper (1) aufgesteckt wird.

17. Hermetisch verschlossener Dosierbehälter nach Anspruch 16, dadurch gekennzeichnet, daß die Schürze (24) auf mindestens zwei gegenüberliegenden Flächen leicht vorstehende Längsriefen (29) aufweist, die mit zusätzlichen Riefen (21) zusammenwirken können, welche auf den Innenflächen des Hohlkörpers (2) vorgesehen sind.

18. Hermetisch verschlossener Dosierbehälter nach Anspruch 16 oder 17, dadurch gekennzeichnet, daß die Schürze (24) entlang ihrer Oberkante einen Sprungring (25) mit geringer Dicke aufweist.

19. Hermetisch verschlossener Dosierbehälter nach Anspruch 1, dadurch gekennzeichnet, daß der Hohlkörper auf mindestens zwei gegenüberliegenden Flächen einen Wulst (22) mit geringer Dicke aufweist, der in einem bestimmten Abstand von der Oberkante unter der Höhe der Schürze (24) des Hohlkörpers angeordnet ist.

20. Hermetisch verschlossener Dosierbehälter nach Anspruch 1, dadurch gekennzeichnet, daß der Hohlkörper außerdem einen zweiten Längswulst (23) aufweist, der parallel zum ersten Wulst (22) angeordnet ist.

21. Hermetisch verschlossener Dosierbehälter nach Anspruch 16, dadurch gekennzeichnet, daß die Schürze (24) auf mindestens zwei Seitenflächen einen Axialwulst (28) mit geringer Dicke aufweist.

22. Hermetisch verschlossener Dosierbehälter nach Anspruch 18, dadurch gekennzeichnet, daß der Sprengring (25) an jeder Ecke (26, 27) eine abgefaste Axialverlängerung aufweist.

23. Hermetisch verschlossener Dosierbehälter nach Anspruch 1, dadurch gekennzeichnet, daß der Ausgießer (2) innenseitige Axialansätze (30) aufweist, die durch einen konvexen Teil über den unteren Rand der Schürze (24) hinausgehen.

## Claims

1. A sealed dispensing container for horticulture or gardening comprising a hollow body (1), a spout (2) and a cap (3), the hollow body and the spout being capable of being connected together by assembly to form a closure which is impervious to the products, the spout (2) comprising an opening (12), characterised in that the opening (12) is disposed in a projection (13) from a side wall of the spout (2) which is in-set relative to said side wall, that a measurement cavity (15, 20) is provided in the cap and that the cap entirely covers the spout.

2. A sealed dispensing container according to claim 1, characterised in that the hollow body (1) is provided with a groove at its inner upper part over the whole periphery ; and that the spout (2) is provided in its external lower part over its whole periphery with a chamfer above which extends a rib which fits into the groove in the hollow body (1).

3. A sealed dispensing container according to claim 1 or 2, characterised in that the hollow body (1) comprises at its upper external part a chamfer extending above a rib over its whole periphery ; the spout (2) comprises at its internal lower part a groove into which the rib fits.

4. A sealed dispensing container according to anyone of the preceding claims, characterised in that the hollow body (1) comprises in its upper external part at least one groove extending over the whole of its periphery ; the spout (2) comprises in its internal lower part over the whole of its periphery a chamfer and at least one rib which fits into the groove in the hollow body (1).

5. A sealed dispensing container according to anyone of the preceding claims, characterised in that the spout (2) comprises at least one stiffener and/or that it comprises an upper part with two slopes, the slope (8) of an opening (12) being more marked than the opposite slope (8) in order to produce an upper ridge (9) disposed between 1/4 and 1/3 of the way along the size adjacent the opening.

6. A sealed dispensing container according to any of the preceding claims, characterised in that the cap (3) comprises at least one stiffener (10) conforming to the walls and which separates the interior of the cap (3) into different parts (15, 20) of dimension adapted to serve as dispensing cavities for the product contained in the hollow body (1) and it comprises a graduated scale (11) extending heightwise.

7. A sealed dispensing container according to any of the preceding claims, characterised in that the cap (3) is formed of injected polypropylene material.

8. A sealed dispensing container according to any of claims 1 to 6, characterised in that the spout (2) is formed of injected semi-shock polystyrene material.

9. A sealed dispensing container according to any of the preceding claims, characterised in that the spout comprises an opening (12) whose dimensions are variable as a function of the fluidity of the product contained in the container and of the dimension of the measurement cavity (15, 20), the height of the opening being no greater than 30 millimeters.

10. A sealed dispensing container according to any of the preceding claims, characterised in that the hollow body (1) is made of injected polypropylene comprising a homopolymere and a copolymere.

11. A sealed dispensing container according to any of the preceding claims, characterised in that it presents a collar for attaching bags, and/or its opening in it upper part is closed by a lid which may be broken with the finger.

12. A sealed dispensing container according to claim 11, characterised in that the lid is in polystyrene material.

13. A sealed dispensing container according to any of the preceding claims, characterised in that each container (II, III) has a parallelopiped shape, the set of containers comprising containers of distinctly different sizes, the height of a container of bigger dimensions being equivalent to the sum of the height and the width of a container of size immediately smaller than the said container of larger size.

14. A sealed dispensing container according to claim 1, comprising at least one hollow body (1), a spout (2) and a cap (3), the hollow body (1) and the spout (2) being capable of being connected to each other by fitting together to produce a closure which is impervious to a product of a particle size greater than 5 tenths of a millimeter, characterised in that the spout (2) is at least partially bonded onto the hollow body (1).

15. A sealed dispensing container according to claim 14, characterised in that the spout is bonded onto the hollow body by a permanently sticky glue of the "HOT MELT" type.

16. A sealed dispensing container according to claim 1, characterised in that the spout is extended by a skirt (24) which fits in the said hollow body (1).

17. A sealed dispensing container according to claim 16, characterised in that the skirt (24) comprises on at least two opposite faces longitudinal striations (29) of small height adapted to cooperate with complementary striations (21) formed on internal surfaces of the hollow body (2).

18. A sealed dispensing container according to claim 16 or 17, characterised in that the skirt (24) presents a rib (25) of small thickness along its upper edge.

19. A sealed dispensing container according to claim 1, characterised in that the hollow body comprises on at least two opposed faces a beading (22) of small thickness, disposed at a distance from the upper edge which is less than the height of the skirt (24) of the hollow body (1).

20. A sealed dispensing container according to claim 1, characterised in that the said hollow body (1) also comprises a second longitudinal beading(23) disposed parallel to the first said beading (22).

21. A sealed dispensing container according to claim 16, characterised in that the skirt (24) comprises on at least two side faces an axial beading (28) of small thickness.

22. A sealed dispensing container according to claim 18, characterised in that the rib (25) presents adjacent each corner (26, 27) a chamfered axial extension.

23. A sealed dispensing container according to claim 1, characterised in that the spout (2) comprises internal axial feet (30) presenting a convex part which extends beyond the lower edge of the skirt (24).
